# EUROPÄISCHE PATENTSCHRIFT

(11) **EP 3 544 835 B1**
(45) Veröffentlichungstag und Bekanntmachung des Hinweises auf die Patenterteilung: **28.10.2020**
(21) Anmeldenummer: 17821786.5
(22) Anmeldetag: 21.11.2017
(51) Int. Cl.: B60D 1/30, B60D 1/06, B60D 1/62

(54) **MESSVORRICHTUNG ZUR MESSUNG EINES KNICKWINKELS UND FAHRZEUGKOMBINATION**
MEASURING DEVICE FOR MEASURING AN ARTICULATION ANGLE AND VEHICLE COMBINATION
DISPOSITIF DE MESURE POUR MESURER UN ANGLE DE FLÈCHE ET COMBINAISON DE VÉHICULES

(30) Priorität: 23.11.2016 CH 15522016
(43) Veröffentlichungstag der Anmeldung: 02.10.2019
(73) Patentinhaber: SCHARMÜLLER GESELLSCHAFT M.B.H. & CO.KG, 4892 Fornach (AT)
(72) Erfinder: TRACHSEL, Remo, 8932 Mettmenstetten (CH)
(74) Vertreter: Gibler & Poth Patentanwälte KG
(86) Internationale Anmeldenummer: PCT/EP2017/079890
(87) Internationale Veröffentlichungsnummer: WO 2018/095899

(56) Entgegenhaltungen:
- EP-A1- 2 511 110
- DE-A1-102009 028 000
- US-A1- 2006 071 448
- US-A1- 2015 165 850

## Beschreibung

Die Erfindung betrifft eine Vorrichtung zur Messung eines Knickwinkels zwischen einem Zugfahrzeug und einem Anhänger, sowie eine Fahrzeugkombination, das in Abhängigkeit des gemessenen Knickwinkels steuerbar ist.

Aus der DE102011113191A1 ist bekannt, dass es im Bereich von Personenkraftwagen wie auch im Bereich von Lastkraftwagen oft hilfreich ist, einen Knickwinkel zwischen einem Zugfahrzeug und einem dazugehörigen Anhänger zu bestimmen.
Der Knickwinkel wird dabei durch Sensoren bestimmt, die in einer Anhängerkupplung des Zugfahrzeugs integriert sind.

Die EP2332750A1 offenbart eine Anhängerkupplung für ein Zugfahrzeug, insbesondere ein Personen-Kraftfahrzeug, zum Anhängen eines Anhängers an das Zugfahrzeug. Die gezeigte Kupplungseinrichtung umfasst einen Kugelträger mit einer Kupplungskugel, die in einer Kupplungsaufnahme einer Zugkugelkupplung des Anhängers drehbar gelagert ist. Ferner ist eine Sensoranordnung zur Messung eines Knickwinkels der Zugkugelkupplung bezüglich des Kugelträgers vorgesehen, die eine Drehmitnahmeeinrichtung aufweist. Die Drehmitnahmeeinrichtung umfasst mindestens einen in einer Kontaktstellung vor die Kugeloberfläche vorstehenden Drehmitnahmekörper, der relativ zur Kugeloberfläche drehbar gelagert ist und eine zu einem reibschlüssigen und/oder formschlüssigen und/oder kraftschlüssigen Drehmitnahmekontakt mit der Innenfläche der Kupplungsaufnahme ausgestaltete Drehmitnahmefläche aufweist.

Die US 2006/0071448 A1 zeigt eine Vorrichtung zur Messung eines Knickwinkels zwischen einem Zugfahrzeug und einem Anhänger sowie eine Fahrzeugkombination aus Zugfahrzeug und Anhänger. Änderungen des Knickwinkels werden mittels Magnetfeldmessung detektiert. Hierbei sind die Sensoren, insbesondere HallSensoren, bevorzugt in einer Ausnehmung der Kugelaufnahme und der Magnet in einer Kugelöffnung der Kupplungskugel angeordnet.

Die DE 10 2009 028 000 A1 zeigt eine Lenkvorrichtung für ein Anhängerfahrzeug sowie eine Vorrichtung zur Messung eines Knickwinkels zwischen einem Zugfahrzeug und einem Anhänger und eine Fahrzeugkombination aus Zugfahrzeug und Anhänger.

Die US 2015/0165850 A1 zeigt eine Methode und ein System zur Stabilitätskontrolle bezüglich eines Zugfahrzeuges und eines Anhängers. Das System umfasst wenigstens einen Sensor, eine Berechnungskomponente, eine Steuerkomponente und einen Aktuator bzw. einen Aktuator für die Bremsvorrichtung.

Die EP 2 511 110 A1 zeigt eine Anhängekupplung mit einem Sensor. In einem ringförmigen Mitnehmerkörper sind mehrere Magnete angeordnet. Der Sensor detektiert die Magnetfeldänderungen der Magnete.

Diese Sensoranordnung, die einen Drehwinkel des mindestens einen Drehmitnahmekörpers relativ zum Kugelträger in einer Messebene erfassen kann, ist aufwendig ausgestaltet und umfasst zahlreiche verschleißanfällige Elemente, die gegebenenfalls Wartung benötigen. Zudem kann die Winkelabweichung nur seitens des Kugelträgers und somit nur seitens des Zugfahrzeugs erfasst werden. Weiterhin bedingt die Kontaktierung des Drehmitnahmekörpers eine präzise Fertigung der Gelenkelemente bzw. der Vorrichtungsteile der Anhängerkupplung. Dabei besteht die Gefahr, dass die Nachführung des Drehmitnahmekörpers bei Erschütterungen der Anhängerkupplung nicht präzise erfolgt.

Zu beachten ist ferner, dass entlang dem drehbaren Drehmitnahmekörper Wasser in die Messvorrichtung eindringen und Vorrichtungsteile schädigen kann. Zudem ist darauf zu achten, dass der Drehmitnahmekörper in einem weiten Temperaturbereich von z.B. minus 20 °C bis plus 40 °C einwandfrei arbeitet und einfrierendes Wasser oder Feuchtigkeit die Messvorrichtung nicht beeinträchtigt, was mit entsprechendem Aufwand verbunden ist.

Weiterhin können Kippbewegungen, d.h. gegenseitiges Neigen des Zugfahrzeugs und des Anhängers z.B. bei der Fahrt über eine wellenförmig aber ohne Richtungsänderung verlaufende Straße, oder Axialverdrehungen, d.h. ein gegenseitiges Verdrehen des Anhängers und des Zugfahrzeugs um eine gemeinsame Längsachse, z.B. bei der Fahrt über eine Schlaglöcher aufweisende Straße, die Messung beeinflussen. Eine Kippbewegung oder eine axiale Verdrehung kann daher fälschlicherweise als Winkeländerung signalisiert werden, die ansonsten nur bei einer Kurvenfahrt auftritt.
Die DE102010045519A1 offenbart eine Anhängerkupplung für ein Zugfahrzeug umfassend eine drehfest mit dem Zugfahrzeug verbundene Kupplungskugel zur Ankopplung einer Kupplungsaufnahme eines Anhängers sowie einen Kopplungsring und einen Sensor. Der Kopplungsring ist derart drehbar in einem Umfangsspalt der Kupplungskugel gelagert, dass er aus der Kupplungskugel hervor ragt, so dass sich durch die Ankopplung der Kupplungsaufnahme an die Kupplungskugel der Kopplungsring derart mit der Kupplungsaufnahme in Eingriff befindet, dass sich der Kopplungsring gegenüber der Kupplungskugel um einen Drehwinkel verdreht, welcher einer Winkeländerung eines Knickwinkels zwischen dem Anhänger und dem Zugfahrzeug entspricht. Der Sensor ist zur Messung dieses Knickwinkels ausgestaltet.
Auch bei dieser Ausgestaltung der Anhängerkupplung resultieren die bereits genannten Nachteile. Insbesondere die beweglichen Vorrichtungsteile sind mit entsprechendem Aufwand präzise zu fertigen und zu lagern. Eine Nachführung des Kopplungsrings ist bei schlechter Kontaktierung, Verschmutzung oder Korrosion nicht gewährleistet. Der Kopplungsring kann zudem verklemmen, falls unterschiedliche Drehmomente auf ihn einwirken oder falls Temperaturdehnungen auftreten. Falls bei einer Änderung des Drehwinkels bzw. Knickwinkels gleichzeitig eine Änderung des Neigungswinkels oder eine axiale Verdrehung auftritt, kann der Kupplungsring gegebenenfalls blockieren, sodass die Änderung des Knickwinkels nicht erfasst werden kann. Ferner können einfrierende Nässe oder Feuchtigkeit sowie eindringende Verschmutzung den Kupplungsring blockieren. Auch in diesem Fall ergibt sich ein relativ hoher Wartungsaufwand.

Der vorliegenden Erfindung liegt daher die Aufgabe zugrunde, eine verbesserte Vorrichtung zur Messung eines Knickwinkels zwischen einem Zugfahrzeug und einem Anhänger anzugeben. Ferner ist eine Fahrzeugkombination anzugeben, das in Abhängigkeit des gemessenen Knickwinkels steuerbar ist.

Die Messvorrichtung soll einfach aufgebaut und mit geringem Aufwand und ohne zusätzlichen Raumbedarf in eine Anhängerkupplung integrierbar sein. Eine erhöhte Präzision bei der Fertigung der Vorrichtungsteile der Messvorrichtung soll nicht erforderlich sein. Ermittelte Messsignale sollen mit geringem Aufwand entweder dem Zugfahrzeug oder dem Anhänger zuführbar sein.

Die Messung des Knickwinkels bzw. des Drehwinkels zwischen Zugfahrzeug und Anhänger soll unabhängig von auftretenden Kippbewegungen und Verdrehungen um die Längsachse präzise gemessen werden können. Insbesondere soll der Knickwinkel auch präzise gemessen werden können, währenddem Schläge oder Erschütterungen auf die Anhängerkupplung einwirken.

Die Messvorrichtung soll dabei immun gegen äußere Einwirkungen, wie mechanische Einwirkungen, Temperaturänderungen, Korrosion oder Nässe, sein. Die Messvorrichtung soll robust und wartungsfrei sein.

Die Messvorrichtung soll zudem zuverlässige und störungsfreie Signale unterbruchsfrei liefern, die vorteilhaft verarbeitet werden können, um den Anhänger zu steuern.

Durch Steuerung des Fahrzeugs, insbesondere des Anhängers, soll dessen Fahrverhalten vorteilhaft beeinflusst werden. Insbesondere sollen die Spurtreue und die Fahrstabilität auf ebener Straße oder in schwierigem Gelände erhöht werden.

Diese Aufgabe wird mit einer Messvorrichtung und einer Fahrzeugkombination gelöst, welche die in Anspruch 1 bzw. 13 angegebenen Merkmale aufweisen. Vorteilhafte Ausgestaltungen der Erfindung sind in weiteren Ansprüchen angegeben.

Die Messvorrichtung zur Messung eines Knickwinkels zwischen einem Zugfahrzeug, das eine Längsachse aufweist, und einem Anhänger, der eine Längsachse aufweist, umfasst eine Anhängerkupplung, welche Anhängerkupplung eine Kupplungskugel, eine der Aufnahme der Kupplungskugel dienende Kugelaufnahme sowie wenigstens einen Magnetsensor umfasst.

Erfindungsgemäß weist die Kupplungskugel eine Kugelöffnung auf, wobei in der Kugelöffnung ein Magnet gelagert ist. Die Kugelaufnahme weist eine Ausnehmung auf, wobei in der Ausnehmung der wenigstens eine Magnetsensor gelagert ist, wobei vom Magnetsensor Änderungen eines vom Magnet erzeugen Magnetfelds erfasst werden.

Der Magnet kann besonders bevorzugt ein Permanentmagnet sein.

Alternativ kann der Magnet ein Elektromagnet sein.

Die erfindungsgemäße Messvorrichtung kann vorteilhaft vollständig in die Anhängerkupplung integriert werden. Die Messvorrichtung erfordert keine Kontaktierung zwischen den Vorrichtungsteilen der Anhängerkupplung und Vorrichtungsteilen der Messvorrichtung, weshalb die genannten Vorrichtungsteile keiner mechanischen Belastung und keinem Verschleiß unterworfen sind. Die Vorrichtungsteile der Messvorrichtung können zudem dicht abgeschlossen in Öffnungen oder Ausnehmungen der Anhängerkupplung angeordnet werden, sodass die Messvorrichtung gegen das Eindringen von Schmutz oder Feuchtigkeit immun ist. Ferner sind Temperaturdehnungen absolut unkritisch. Auf Kontaktelemente kann vollständig verzichtet werden, weshalb äußere Einwirkungen auf die Messvorrichtung unkritisch sind. Die erfindungsgemäße Messvorrichtung bzw. die Anhängerkupplung mit dieser Messvorrichtung sind daher praktisch wartungsfrei und frei von Betriebsstörungen auch bei ungünstigen Betriebsverhältnissen.

Die Messvorrichtung liefert ein kontinuierliches bzw. stufenloses Messsignal, welches präzise der Größe des Knickwinkels entspricht. Das Messsignal kann daher zur Steuerung und Regelung verwendet werden, wobei ein sprunghaftes und unstetiges Verhalten vermieden wird. Die erforderliche Steuerung oder Regelung kann daher praktisch verzögerungslos erfolgen.

Mittels handelsüblicher Magnetsensoren, insbesondere Hallsensoren, können zuverlässige und störungsfreie Messsignale in einem größeren Spannungsbereich von z.B. 0V bis 5V gewonnen werden.

Z.B. wird ein Hallsensor vom Typ S12-AH-RGCD3 der Firma Sensor Solutions Corporation, Steamboat Springs, Colorado, CO 80487, verwendet. Dieser Hallsensor wird mit einer Betriebsspannung im Bereich von 8 V bis 30 V betrieben und weist ein Gehäuse aus rostfreiem Stahl auf, das mit einem Außengewinde versehen ist. Der Hallsensor kann daher in eine Ausnehmung oder Aufnahmeöffnung eingeschraubt werden. Der Hallsensor liefert ein analoges Ausgangssignal, welches in Abhängigkeit der Magnetfeldstärke senkrecht zur Stirnseite des Hallsensors ändert. Die Ausgangsspannung ist vorzugsweise proportional zur vorzugsweise geregelten Betriebsspannung. Magnetische Felder zwischen -1000 Gauss und +1000 Gauss sind messbar. Falls kein magnetisches Feld präsent ist, liefert der Hallsensor eine Ausgangsspannung von 2.5V. Bei Feldänderungen erfolgt eine Änderung der Ausgangsspannung von 2.5 mV pro Gauss. Die Ausgangsspannung kann daher je nach Größe und Polarität des angelegten Magnetfeldes zwischen 0V und 5V ändern.

Anstelle analoger Magnetsensoren bzw. Hallsensoren sind auch Magnetsensoren bzw. Hallsensoren einsetzbar, die ein digitales Ausgangssignal abgeben, das vorzugsweise proportional zum angelegten Magnetfeld ändert. Z.B. kann der Magnetsensor ein pulsweitenmoduliertes Rechtecksignal abgeben, dessen Tastverhältnis zwischen den Extremen ändert. Ferner kann der Magnetsensor drahtgebunden oder drahtlos mit einer Steuereinheit kommunizieren.

Die der Aufnahme des Magneten dienende Kugelöffnung ist eine Bohrung, welche Bohrung die Kupplungskugel ganz oder teilweise durchläuft. Eine Bohrung kann die Kupplungskugel daher ganz oder teilweise durchdringen. Sofern die Bohrung nur einseitig in die Kupplungskugel eingebracht wird, kann der Magnet einfacher montiert werden. Sofern die Kugelöffnung bzw. Kugelbohrung die Kupplungskugel vollständig durchdringt und beidseitig mit gleichem Material abgeschlossen wird, kann beim Betrieb der Messvorrichtung eine vollständige Symmetrie erzielt werden, d.h. das Ausgangssignal des Magnetsensors ändert unabhängig von der Drehrichtung.

Die Bohrung kann insbesondere zylinderförmig sein.

Der Magnet kann insbesondere zylinderförmig sein.

Vorzugsweise weist der Magnet ein Außengewinde auf, sodass er bis zu einer vorgesehenen Position oder bis zu einem Anschlag in die Kupplungskugel eingedreht werden kann. Die Kugelöffnung ist in diesem Fall mit einem dazu korrespondierenden Innengewinde versehen.

Alternativ oder zusätzlich kann innerhalb der Kugelöffnung ein Füllstoff, insbesondere wie eine Masse, ein Harz oder ein Klebstoff, vorgesehen werden, der den Magneten hält und/oder die Kugelöffnung einseitig oder beidseitig abdichtet. Das Füllmaterial kann zudem ferromagnetische Elemente aufweisen.

Die Abmessungen des Magneten sowie dessen Position innerhalb der Kugelöffnung sind insbesondere derart gewählt, dass zwischen den Polen des Magneten und der Außenfläche der Kupplungskugel ein Raum verbleibt. Die Enden des Magneten können daher von der Außenfläche der Kupplungskugel beabstandet angeordnet sein. Insbesondere sind die Abmessungen des Magneten sowie dessen Position innerhalb der Kugelöffnung derart gewählt, dass sich das magnetische Feld im Bereich des Luftspalts zwischen der Außenfläche der Kupplungskugel und der Innenfläche der Kugelaufnahme erstreckt und vom wenigstens einen Magnetsensor mit hoher Feldstärke erfasst werden kann.

In vorzugsweisen Ausgestaltungen können zwei Magnetsensoren vorgesehen sein, die je in einer Ausnehmung der Kugelaufnahme angeordnet sind.

Insbesondere können die zwei Magnetsensoren auf entgegengesetzten Seiten des Magneten diametral gegenüber liegen. Die Ausgangssignale der beiden Magnetsensoren können daher miteinander verglichen werden, um den ordnungsgemäßen Zustand der Messvorrichtung zu kontrollieren. Dazu kann das Ausgangssignal eines der Magnetsensoren invertiert werden, wonach die Differenz der Ausgangssignale der beiden Magnetsensoren mit einem Schwellenwert verglichen wird. Sofern dieser Schwellwert überschritten wird, kann ein Alarmsignal ausgelöst werden, welches eine Unregelmäßigkeit, z.B. den Ausfall eines Magnetsensors, signalisiert.

Die beiden Magnetsensoren können auch einen Winkel von 90° einschließen, sodass unterschiedliche Signale geliefert werden.

Die erfindungsgemäße Messvorrichtung erlaubt es, bereits in der einfachsten Ausgestaltung mit nur einem Magneten und nur einem Magnetsensor praktisch alle notwendigen Informationen bezüglich des vorliegenden Knickwinkels zu gewinnen. Es können jedoch zusätzliche Magneten und zusätzliche Magnetsensoren eingesetzt werden, um nebst dem Knickwinkel weitere Bewegungen der Anhängerkupplung präzise zu erfassen. Nachstehend wird gezeigt, dass es bei geeigneter Anordnung des Magneten und des Magnetsensors gelingt, für verschiedene Bewegungen der Vorrichtungsteile der Anhängerkupplung ein Ausgangssignal des Magnetsensors zu erzielen, welches praktisch ausschließlich von Änderungen des Knickwinkels abhängig ist.

Dazu ist der Magnet in einer vorzugsweisen Ausgestaltung mit seiner Längsachse, welche Längsachse zwischen den magnetischen Polen des Magneten verläuft, parallel zur Längsachse des Fahrzeugs, normalerweise des Zugfahrzeugs, ausgerichtet, mit welchem Fahrzeug insbesondere die Kupplungskugel fest verbunden ist.

Der Magnet ist vorzugsweise derart angeordnet, dass der Mittelpunkt, vorzugsweise der magnetische Mittelpunkt, des Magneten und der ein Rotationszentrum definierende Gelenkmittelpunkt der Anhängerkupplung zumindest annähernd dieselbe Position aufweisen. Auf diese Weise ist gesichert, dass Änderungen der Ausgangsspannung des Magnetsensors weitgehend proportional zu Änderungen des Knickwinkels verlaufen.

Damit die Feldlinien des vom Magneten erzeugten Magnetfeldes im Wesentlichen außerhalb der Kupplungskugel verlaufen, ist diese vorzugsweise aus einem diamagnetischen oder paramagnetischen Werkstoff gefertigt. Vorzugsweise wird ein Werkstoff verwendet, dessen Permeabilitätszahl µᵣ kleiner 10, besonders bevorzugt kleiner 1 ist.

Vorzugsweise ist die Kupplungskugel aus einem Edelstahl gefertigt. Beispielsweise wird Material verwendet, das auch für die Fertigung des Gehäuses des Magnetsensors verwendet wird. Der Edelstahl kann insbesondere einer Chrom-Nickel-Legierung sein.

Die Kugelaufnahme kann aus demselben Material wie die Kupplungskugel oder auch aus konventionellen Materialien gefertigt werden. Somit können konventionelle Kugelaufnahmen verwendet werden.

Zur optimalen Ermittlung des Knickwinkels weist die Kugelaufnahme bevorzugt eine Ausnehmung auf, deren Längsachse, und somit die Längsachse des Magnetsensors, radial zum Mittelpunkt der Kupplungskugel, zum magnetischen Mittelpunkt des Magneten oder zum Gelenksmittelpunkt der Anhängerkupplung und senkrecht zur Längsachse des Magneten ausgerichtet ist.

Die Ausnehmung kann insbesondere zylinderförmig sein.

Besonders bevorzugt wird der wenigstens eine Magnetsensor derart angeordnet, dass der Magnetsensor bei koaxialer Ausrichtung der Längsachsen des Zugfahrzeugs und des Anhängers von beiden Polen des Magneten zumindest annähernd gleich weit entfernt liegt. Der Magnetsensor kann dann insbesondere innerhalb der Äquatorebene des Magneten liegend angeordnet sein. Bei dieser Anordnung des Magnetsensors und der Ausrichtung des Magneten koaxial zur Längsachse des damit verbundenen Anhängers oder Zugfahrzeugs liegt der Magnetsensor bei Fehlen eines Knickwinkels exakt am Äquator des Magnetfeldes. Bei einer Rotation des Magneten und somit einer entsprechende Verdrehung der Kupplungskugel läuft der Magnetsensor daher entlang dem Äquator des Magnetfeldes, ohne dass eine Änderung desselben detektiert wird. Sofern der Magnet und mit ihm die Kopplungskugel hingegen in einer Ebene gedreht wird, die senkrecht zur Längsachse bzw. Messachse des Magnetsensors verläuft, so verbleibt der Messsensor an derselben Stelle des Äquators des Magnetfeldes, weshalb auch in diesem Fall keine Feldänderung detektiert wird. Bei dieser vorzugsweisen Ausgestaltung der Messvorrichtung bzw. der erfindungsgemäß ausgestalteten Anhängerkupplung können die Kupplungskugel und die Kugelaufnahme somit in zwei verschiedenen Ebenen gegeneinander gedreht werden, ohne dass das Ausgangssignal des Magnetsensors ändert.

In einer erfindungsgemäßen Fahrzeugkombination, umfassend ein Zugfahrzeug und einen Anhänger,, das mit einer erfindungsgemäßen Messvorrichtung ausgerüstet ist, ist eine mit dem wenigstens einem Magnetsensor verbundene Steuereinheit vorgesehen, in der die Ausgangssignale des Magnetsensors anhand eines Steuerprogramms verarbeitet werden, um in Abhängigkeit des gemessenen Knickwinkels wenigstens einen Aktuator anzusteuern, der über eine Übertragungseinheit mit den Rädern des Zugfahrzeuges und/oder Anhängers und/oder damit verbundenen Vorrichtungen gekoppelt ist. In Abhängigkeit des gemessenen Knickwinkels kann daher das Fahrverhalten des Fahrzeugs vorteilhaft beeinflusst werden.

In einer vorzugsweisen Ausgestaltung, insbesondere des Anhängers, ist wenigstens ein Paar der Räder des Zugfahrzeuges und/oder Anhängers lenkbar aufgehängt und mittels des wenigstens einen Aktuators steuerbar.

Insbesondere ist der Drehwinkel der Räder mittels des Steuerprogramms in Abhängigkeit des gemessenen Knickwinkels entsprechend wenigstens einem, insbesondere als Proportionalitätsfaktor oder Steuerkurve ausgebildeten, Sollwert derart steuerbar, dass die Räder des Anhängers und die Räder des Zugfahrzeugs in einer Spur verlaufen oder das Fahrzeug in einer vorgesehenen Spur gehalten wird.

In einer weiteren vorzugsweisen Ausgestaltung ist wenigstens einem der Räder des Anhängers eine individuell betätigbare Bremsvorrichtung zugeordnet, wobei die Bremsvorrichtung mittels des wenigstens einen Aktuators steuerbar ist. Dadurch kann der Anhänger stabilisiert und der Knickwinkel gegebenenfalls reduziert werden.

Insbesondere ist die Bremsvorrichtung mittels des Steuerprogramms in Abhängigkeit des gemessenen Knickwinkels entsprechend wenigstens einem, insbesondere als Proportionalitätsfaktor oder Steuerkurve ausgebildeten, Sollwert derart steuerbar ist, dass einer Auslenkung in Richtung des gesteuerten Rades entgegen gewirkt wird.

Mittels der erfindungsgemäßen Messvorrichtung und der zugehörigen Steuervorrichtung kann das Fahrverhalten der Fahrzeugkombination daher optimiert und stabilisiert werden.

Nachfolgend wird die Erfindung anhand von Zeichnungen näher erläutert. Dabei zeigt:

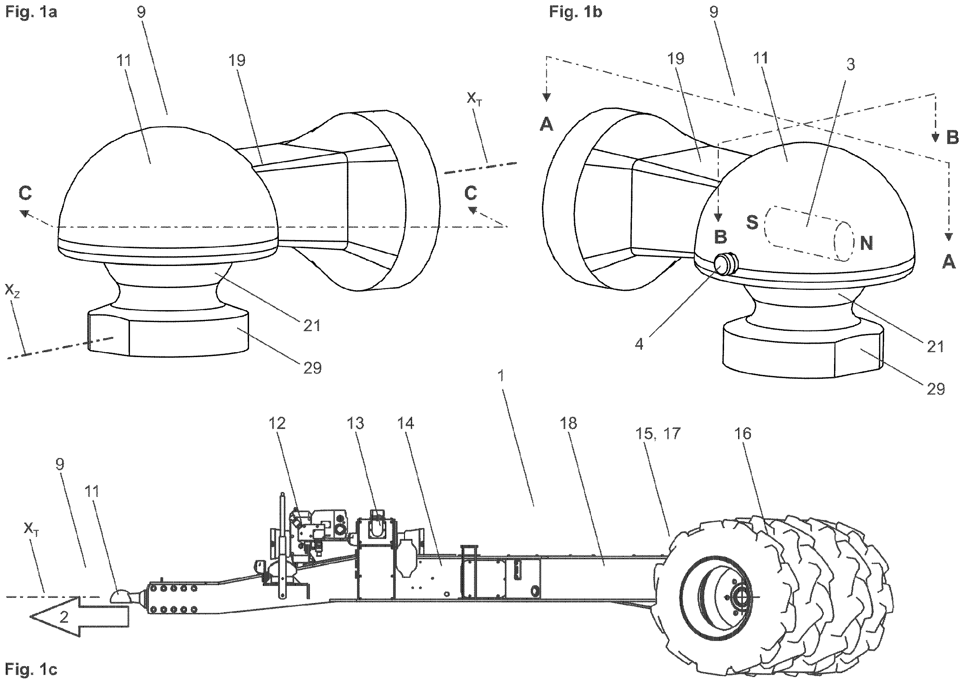

- Fig. 1a: eine erfindungsgemäße Messvorrichtung zur Messung eines Knickwinkels mit einer Anhängerkupplung 9, die eine Kupplungskugel 21 und eine Kugelaufnahme 11 umfasst;

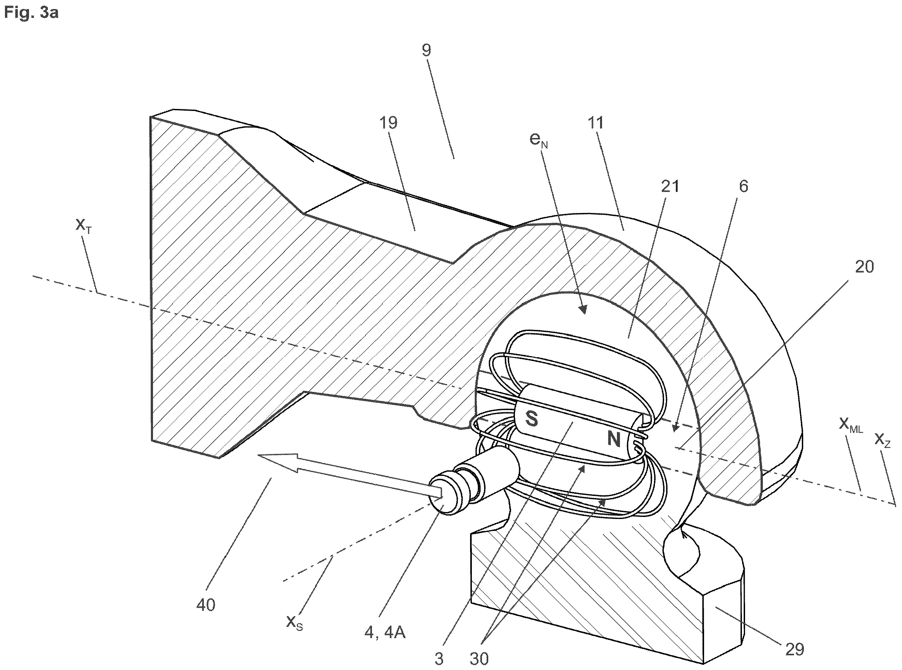

- Fig. 1b: die Vorrichtung von Fig. 1a von der anderen Seite gezeigt mit einem Magnetsensor 4, mittels dessen bei der Drehung der Kupplungskugel 21 Änderungen eines Magnetfeldes messbar sind, welches von einem Magneten 3 (siehe Fig. 3a) erzeugt wird, der in die Kupplungskugel 21 eingebettet ist;
- Fig. 1c: einen erfindungsgemäßen Anhänger 1, der über eine Anhängerkupplung 9 gemäß Fig. 1a mit einem schematisch als Pfeil gezeigten Zugfahrzeug 2 verbunden ist;

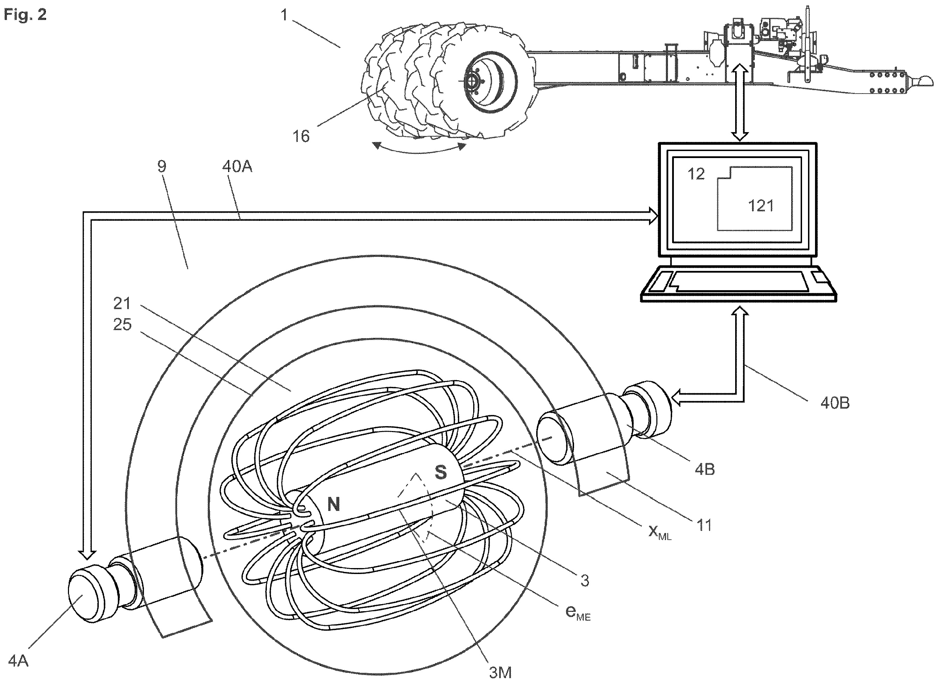

- Fig. 2: die Messvorrichtung von Fig. 1a schematisch gezeigt in einer vorzugsweisen Ausgestaltung mit der Kupplungskugel 21, in der ein zylinderförmiger Magnet 3 angeordnet ist, und mit der Kugelaufnahme 11, in der optional zwei Magnetsensoren 4A, 4B angeordnet sind, deren Ausgangssignale zu einer Steuervorrichtung 12 des Anhängers 1 übertragen werden;
- Fig. 3a: einen Längsschnitt durch die Messvorrichtung und die Anhängerkupplung 9 entlang der Schnittlinie A--A von Fig. 1b mit Blick auf eine Neigungsebene e_{N}, in der die Kupplungskugel 21 gegenüber der Kugelaufnahme 11 drehbar ist, ohne dass sich die Distanz zwischen den Polen S,N des Magneten 3 und dem Magnetsensor 4 ändert;

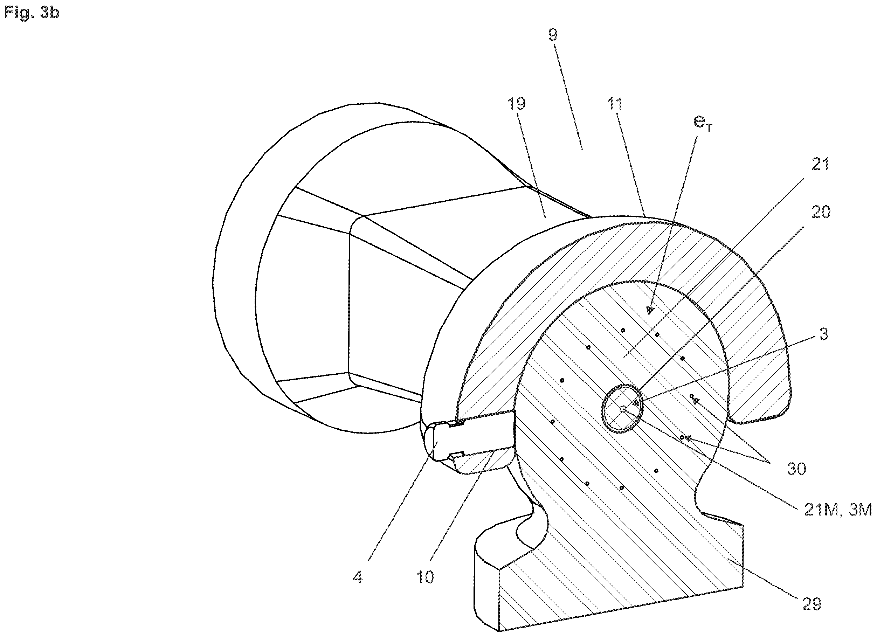

- Fig. 3b: einen Querschnitt durch die Messvorrichtung und die Anhängerkupplung 9 entlang der Schnittlinie B--B von Fig. 1b mit Blick auf eine Torsionsebene e_{T}, in der die Kupplungskugel 21 gegenüber der Kugelaufnahme 11 drehbar ist, ohne dass sich die Distanz zwischen den Polen S,N des Magneten 3 und dem Magnetsensor 4 ändert;

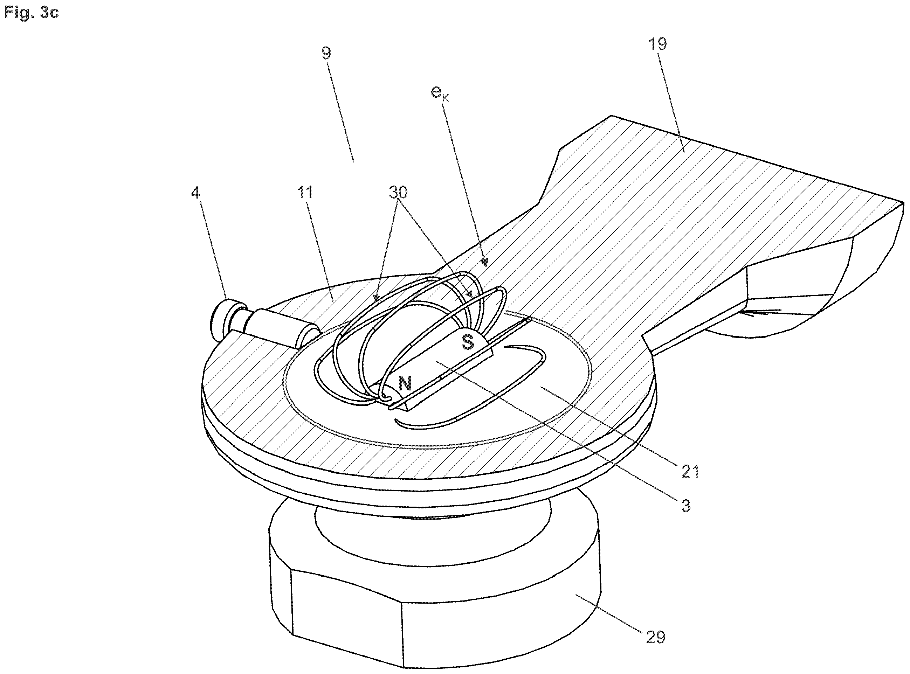

- Fig. 3c: einen Querschnitt durch die Messvorrichtung und die Anhängerkupplung 9 entlang der Schnittlinie C--C von Fig. 1a mit Blick auf eine Drehebene e_{K}, in der die Kupplungskugel 21 gegenüber der Kugelaufnahme 11 drehbar ist, wobei sich die Distanz zwischen den Polen S,N des Magneten 3 und dem Magnetsensor 4 ändert und der aus der Drehung resultierende Knickwinkel erfasst werden kann; und

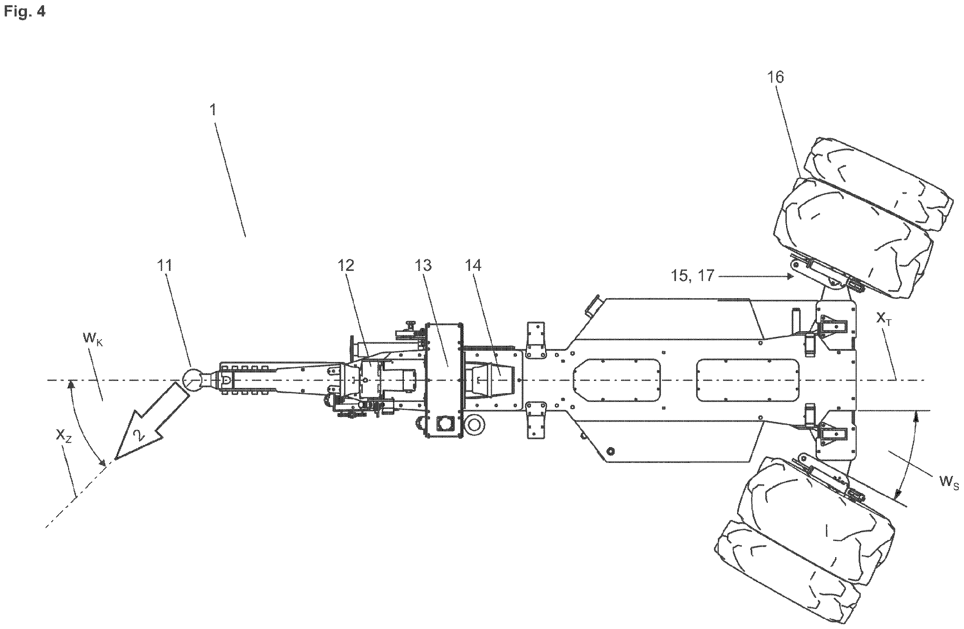

- Fig. 4: den Anhänger 1 und das als Pfeil schematisch gezeigte Zugfahrzeug 2 von Fig. 1c, die mit ihren Längsachsen x_{T} und x_{Z} einen Knickwinkel w_{K} einschließen.

Fig. 1a zeigt eine erfindungsgemäße Messvorrichtung zur Messung eines Knickwinkels mit einer Anhängerkupplung 9, die eine von einem Kugelträger 29 gehaltene Kupplungskugel 21 und eine von einem Aufnahmeträger 19 gehaltene Kugelaufnahme 11 umfasst. Anhängerkupplungen 9 dieser Art, die z.B. von der Scharmüller GmbH & CoKG, AT-4892 Fornach, gefertigt werden, beispielsweise die Anhängerkupplung K 80, erlauben es, beliebige Zugfahrzeuge und Anhänger gelenkig miteinander zu verbinden.

Fig. 1b zeigt die Vorrichtung von Fig. 1a von der anderen Seite mit einem in die Kupplungsaufnahme 11 eingesetzten Magnetsensor 4, mittels dessen bei der Drehung der Kupplungskugel 21 oder der Kugelaufnahme 11 Änderungen des Magnetfeldes messbar sind, welches von einem, schematisch gezeigten, Magneten 3 erzeugt wird, der in die Kupplungskugel 21 eingebettet ist. Der Magnetsensor 4, der in einer Ausnehmung 10 der Kugelaufnahme 11 gehalten ist, wie beispielhaft in Fig. 3b gezeigt, ist z.B. ein Hallsensor vom oben genannten Typ S12-AH-RGCD3.

Wie dies in Fig. 1c und Fig. 4 beispielsweise gezeigt ist, ist die Kugelaufnahme 11 mit einem Anhänger 1 und die Kupplungskugel 21 mit dem Kugelträger 29 mit dem Zugfahrzeug starr verbunden. Eingezeichnet sind die Längsachsen x_{Z} und x_{T} des Zugfahrzeugs 2 und des Anhängers 1, die bei einer Fahrt der Fahrzeugkombination entlang einer ebenen und geraden Straße zumindest annähernd koaxial zueinander ausgerichtet sind. Bei der Fahrt entlang einer ebenen aber entlang einer Kurve verlaufenden Straße ändert sich allein der Knickwinkel w_{K} entsprechend dem Kurvenradius, wie dies in Fig. 4 gezeigt ist. D.h. es erfolgt eine Verdrehung der Teile der Anhängerkupplung 9 innerhalb einer horizontalen Ebene. Bei einer Fahrt entlang einer geraden Straße, deren Steigung ändert, ändert der Neigungswinkel, d.h. es erfolgt eine Verdrehung der Teile der Anhängerkupplung 9 in einer vertikalen Ebene. Bei einer Fahrt auf einer gerade verlaufenden Straße ohne Steigungsänderungen, die aber wechselseitig Unebenheiten, z.B. Schlaglöcher aufweist, erfolgt fallweise eine gegenseitige axiale Verdrehung der Teile der Anhängerkupplung 9. Oft treten die beschriebenen Verdrehungen der Anhängerkupplung 9 in Kombination auf.

In der gezeigten vorzugsweisen Ausgestaltung der erfindungsgemäßen Messvorrichtung werden Änderungen des Magnetfelds nur dann erzeugt, wenn eine Änderung des Knickwinkels der Anhängerkupplung auftritt. Verdrehungen der Anhängerkupplung um deren Längsachse oder gegenseitige Neigungen der Teile der Anhängerkupplung bei einer Steigungsänderung bleiben vorteilhaft ohne Einfluss auf den Magnetsensor und dessen Ausgangssignal. Diese bei der Messung nicht berücksichtigten Bewegungen können jedoch in analoger Weise anhand zusätzlich installierter Magnete 3 und Magnetsensoren 4 erfasst werden, falls dies gewünscht ist.

Der gemessene Knickwinkel bzw. das Ausgangssignal des Magnetsensors 4 kann auf verschiedene Weise im Zugfahrzeug 2 oder im Anhänger 1 vorteilhaft ausgewertet und verwendet werden. Im Zugfahrzeug können z.B. abnormale Veränderungen des Knickwinkels angezeigt werden, um z.B. auf einem Display dem Fahrer ein unerwünschtes Fahrverhalten zu signalisieren. Im Anhänger 1 kann das Ausgangssignal des Magnetsensors 4 verwendet werden, um die Räder 16 entsprechend dem gemessenen Knickwinkel w_{K} zu steuern. Wie dies in Fig. 4 gezeigt ist, werden die beiden Räder des Anhängers 1 um einen Steuerwinkel w_{S} gedreht. Bei dieser Steuerung folgt der Anhänger 1 exakt der Spur des Zugfahrzeugs 2. Insbesondere bei übermäßigen Änderungen des Knickwinkels w_{K} kann vorteilhaft auch auf die Bremsen eingewirkt werden, die den Rädern 16 individuell zugeordnet sind.

Dazu sind beim Anhänger 1 auf einem Chassis 18 eine Steuervorrichtung 12 vorgesehen, in der das Ausgangssignal des Magnetsensors 4 mittels eines Anwendungsprogramms 121, wie beispielhaft in Fig. 2 dargestellt, verarbeitet und entsprechende Steuersignale an wenigstens einen Aktor bzw. Aktuator 13 abgegeben werden, der über Übertragungsleitungen 14, elektrische oder hydraulische Leitungen oder Gestänge, auf mechanische oder elektrische Vorrichtungen einwirkt, die zur individuellen oder paarweisen Bremsung oder Steuerung der Räder vorgesehen sind. Wie erwähnt kann die erfindungsgemäße Lösung bei unterschiedlichen Fahrzeugen eingesetzt werden, die unterschiedliche technische Systeme aufweisen, die vorzugsweise in Abhängigkeit des gemessenen Knickwinkels beeinflussbar sind.

Fig. 2 zeigt die Messvorrichtung von Fig. 1a in einer schematischen Darstellung mit der Kupplungskugel 21, in der ein zylinderförmiger Magnet 3 angeordnet ist, und mit der Kugelaufnahme 11, in der optional zwei Magnetsensoren 4A, 4B angeordnet sind, deren Ausgangssignale über Messleitungen 40A, 40B zur Steuervorrichtung 12 des Anhängers 1 übertragen werden. Durch die Verwendung von zwei Magnetsensoren 4A, 4B erfolgt die Messung des Knickwinkels w_{K} redundant. Bei Ausfall eines Magnetsensors 4A oder 4B können die Ausgangssignale des anderen Sensors 4B oder 4A verwendet werden. Vorteilhaft kann auch ein Vergleich der Ausgangssignale beider Magnetsensoren 4A, 4B durchgeführt werden, um den Zustand der Messvorrichtung zu prüfen.

Es ist gezeigt, dass der Magnet 3 zylindrisch ausgebildet ist und zwei Pole S, N aufweist, die von der Längsachse x_{ML} des Magneten 3 durchstoßen werden. Andeutungsweise eingezeichnet ist ferner die Äquatorebene e_{ME} des Magnetfeldes, die senkrecht zur Längsachse x_{ML} des Magneten 3 und durch den Mittelpunkt 3M zwischen den beiden Polen S, N des Magneten 3 verläuft.

Beim vorliegenden Knickwinkel verläuft die Längsachse x_{ML} des Magneten 3 koaxial zu den Längsachsen der zylinderförmigen Magnetsensoren 4A, 4B. Vom ersten Magnetsensor 4A wird dabei eine Spannung von 5V und vom zweiten Magnetsensor 4B wird eine Spannung von 0V abgegeben. Diese Ausrichtung des Magneten 3 liegt vorzugsweise nach einer gegenseitigen Drehung der Kupplungskugel 21 und der Kugelaufnahme 11 um 90° vor.

In den Figuren 3a, 3b und 3c, in denen die Kupplungskugel 21 und die Kugelaufnahme 11 in Schnittdarstellung gezeigt sind, sind die Längsachsen x_{Z} und x_{T} des Zugfahrzeugs 2 und des Anhängers 1 koaxial zueinander ausgerichtet.

Fig. 3a zeigt einen Längsschnitt durch die Messvorrichtung und die Anhängerkupplung 9 entlang der Schnittlinie A--A von Fig. 1b mit Blick auf eine Neigungsebene e_{N}, in der die Kupplungskugel 21 gegenüber der Kugelaufnahme 11 drehbar ist, ohne dass sich die Distanz zwischen den Polen S, N des Magneten 3 und dem Magnetsensor 4 ändert.

Fig. 3a zeigt, dass die Kupplungskugel 21 eine zylindrische Kugelöffnung 20 aufweist, in der der zylindrische Magnet 3 gelagert ist. Die Kugelöffnung 20 ist eine Bohrung, welche die Kupplungskugel 21 ganz oder teilweise durchläuft. Sofern die Kugelöffnung 20 einseitig verschlossen ist, so kann der Magnet 3 bis zu einem Anschlag in die Kupplungskugel 21 eingeschoben werden. Sofern die Kugelöffnung 20 die Kupplungskugel 21 vollständig durchstößt, wird der Magnet 3 vorzugsweise so weit eingeschoben, bis der Mittelpunkt des Magneten 3 beim Mittelpunkt der Kupplungskugel 21 liegt. Wie erwähnt, können der Magnet 3 und die Kugelöffnung 20 mit Gewindeelementen versehen sein, die es erlauben, den Magneten 3 bis zu einer gewünschten Position einzuschrauben. Alternativ oder zusätzlich kann verbliebener Raum neben den Polen S, N des Magneten 3 mit einem Füllstoff 6, wie einer Gussmasse, einem Harz oder einem Klebstoff, gefüllt werden, um den Magneten 3 zu fixieren und die Kugelöffnung 20 einseitig oder beidseitig dicht abzuschließen.

Wie dies gezeigt ist, wird vorzugsweise ein Magnet 3 gewählt, der die Kugelöffnung 20 in Richtung der Längsachse nicht vollständig ausfüllt. Dadurch wird verhindert, dass die Feldlinien 30 des Magnetfeldes tief in die metallene Kugelaufnahme 11 eintreten und das Magnetfeld unerwünscht verändert wird. Vorzugsweise wird ebenfalls verhindert, dass die Feldlinien 30 des Magnetfeldes innerhalb der Kupplungskugel 21 kurzgeschlossen werden und nicht aus der Kupplungskugel 21 heraustreten können. Dazu wird die Kupplungskugel 21 vorzugsweise aus einem diamagnetischen oder paramagnetischen Werkstoff gefertigt, welcher eine tiefe Permeabilitätszahl µr aufweist.

Der Magnet 3 ist derart in die Kupplungskugel 21 eingebettet, dass dessen Längsachse x_{ML} koaxial oder achsparallel zur Längsachse x_{Z} des Zugfahrzeugs 2 verläuft. Der Magnetsensor 4 ist mit seiner Längsachse x_{S} senkrecht zur Längsachse x_{ML} des Magneten 3 ausgerichtet. Vorzugsweise liegt die Längsachse x_{S} bzw. Messachse des Magnetsensors 4 in der Äquatorebene e_{ME} des Magneten 3 und verläuft durch dessen magnetischen Mittelpunkt 3M, wie beispielhaft in Fig. 2 dargestellt.

In dieser Mittellage gibt der verwendete Hallsensor 4 über eine Sensorleitung 40 eine Mittenspannung von 2.5V ab. Sofern die Kupplungskugel 21 in der Schnittebene bzw. der Neigungsebene e_{N}, gegenüber der Kugelaufnahme 11 gedreht wird, so bleibt der Magnetsensor 4 auf denselben Äquatorpunkt ausgerichtet. Die Ausgangsspannung des Magnetsensors 4 ändert bei dieser Drehung daher nicht. Wird die Kupplungskugel 21 mit dem Magneten 3 um die gemeinsame Längsachse x_{ML} bzw. x_{Z} gedreht, so verläuft der Magnetsensor 4 entlang dem Äquator des Magnetfeldes, weshalb auch in diesem Fall keine Änderung der Ausgangsspannung des Magnetsensors 4 auftritt.

Fig. 3b zeigt einen Querschnitt durch die Messvorrichtung und die Anhängerkupplung 9 entlang der Schnittlinie B--B von Fig. 1b mit Blick auf eine Torsionsebene e_{T}, in der die Kupplungskugel 21 gegenüber der Kugelaufnahme 11 drehbar ist, ohne dass sich die Distanz zwischen den Polen S, N des Magneten 3 und dem Magnetsensor 4 ändert. Wird die Kupplungskugel 21 mit dem Magneten 3 um die gemeinsame Längsachse x_{ML} bzw. x_{Z} gedreht bzw. wird die Kupplungskugel 21 gegenüber der Kugelaufnahme 11 in der Torsionsebene e_{T} gedreht, so läuft der Magnetsensor 4 entlang dem Äquator des Magnetfeldes, weshalb auch in diesem Fall keine Feldänderung erfasst und keine Änderung der Ausgangsspannung des Magnetsensors 4 auftritt.

Fig. 3c zeigt einen Querschnitt durch die Messvorrichtung und die Anhängerkupplung 9 entlang der Schnittlinie C--C von Fig. 1a mit Blick auf eine normalerweise horizontal ausgerichtete Drehebene e_{K}, in der die Kupplungskugel 21 gegenüber der Kugelaufnahme 11 drehbar ist, wobei sich die Distanz zwischen den Polen S,N des Magneten 3 und dem Magnetsensor 4 ändert und der aus der Drehung resultierende Knickwinkel w_{K} gemessen werden kann. Erfolgt eine Drehung der Kupplungskugel 21 um +90° so liegt der Nordpol N dem Magnetsensor 4 gegenüber, der eine Spannung von 0V abgibt. Erfolgt eine Drehung der Kupplungskugel 21 um-90° so liegt der Südpol S dem Magnetsensor 4 gegenüber, der eine Spannung von 5V abgibt. Somit können Knickwinkel von +90° bis -90° kontinuierlich erfasst werden.

Fig. 4 zeigt den Anhänger 1 und das als Pfeil schematisch gezeigte Zugfahrzeug 2 von Fig. 1c, die mit ihren Längsachsen x_{T} und x_{Z} einen Knickwinkel w_{K} einschliessen, entsprechend dem die Räder 16 um den Steuerwinkel w_{S} gedreht wurden. Dieser Steuerwinkel w_{S} wurde derart gewählt, dass der Anhänger 1 der Spur des Zugfahrzeugs 2 folgt. Der Steuerwinkel w_{S} kann auch mit einem Versatz bzw. mit einer Abweichung versehen werden, die z.B. in geneigtem Gelände oder bei höherer Geschwindigkeit vorgesehen wird, um seitliche Verschiebungen zu kompensieren. Die Räder 16 des Anhängers 1 sind dabei mit einer Radaufhängung 15 für lenkbare Räder versehen, wie sie z.B. in der EP0193796A1 beschrieben ist. Alternativ oder zusätzlich kann jedem Rad 16 eine Bremsvorrichtung 17 zugeordnet sein, die durch die Steuervorrichtung 12 sowie einen Aktuator 13 und eine Übertragungsleitung 14 ansteuerbar ist.

## Patentansprüche

1. Messvorrichtung zur Messung eines Knickwinkels (w_{K}) zwischen einem Zugfahrzeug (2), das eine Längsachse (x_{Z}) aufweist, und einem Anhänger (1), der eine Längsachse (x_{T}) aufweist, mit einer Anhängerkupplung (9), welche Anhängerkupplung (9) eine Kupplungskugel (21), eine der Aufnahme der Kupplungskugel (21) dienende Kugelaufnahme (11) sowie wenigstens einen Magnetsensor (4; 4A, 4B) umfasst, wobei die Kupplungskugel (21) eine Kugelöffnung (20) aufweist, wobei in der Kugelöffnung (20) ein Magnet (3) gelagert ist, wobei die Kugelaufnahme (11) eine Ausnehmung (10) aufweist, wobei in der Ausnehmung (10) der wenigstens eine Magnetsensor (4; 4A, 4B) gelagert ist, wobei vom Magnetsensor (4; 4A, 4B) Änderungen eines vom Magnet (3) erzeugten Magnetfelds (30) erfasst werden, **dadurch gekennzeichnet, dass** zur Messung des Knickwinkels unabhängig von auftretenden Kippbewegungen und Verdrehungen um die Längsachse (x_{Z}, x_{T}) der Mittelpunkt (3M) des Magneten (3) und der ein Rotationszentrum definierende Gelenkmittelpunkt (21M) der Anhängerkupplung (9) zumindest annähernd dieselbe Position aufweisen.

2. Messvorrichtung nach Anspruch 1, **dadurch gekennzeichnet, dass** die Kugelöffnung (20) eine Bohrung ist, welche Bohrung die Kupplungskugel (21) ganz oder teilweise durchläuft, und/oder dass die Ausnehmung (10) eine Bohrung ist.

3. Messvorrichtung nach Anspruch 1 oder 2, **dadurch gekennzeichnet, dass** der Magnet (3) mit seiner Längsachse (x_{ML}), welche Längsachse (x_{ML}) zwischen magnetischen Polen (N, S) des Magneten verläuft, parallel zur Längsachse (x_{Z}) des Zugfahrzeugs (2) ausgerichtet ist.

4. Messvorrichtung nach einem der Ansprüche 1 bis 3, **dadurch gekennzeichnet, dass** die Abmessungen des Magneten (3) sowie dessen Position innerhalb der Kugelöffnung (20) derart gewählt sind, dass zwischen den Polen (N, S) des Magneten (3) und der Aussenfläche (25) der Kupplungskugel (21) ein Raum verbleibt.

5. Messvorrichtung nach einem der Ansprüche 1 bis 4, **dadurch gekennzeichnet, dass** der Magnet (3) und die Kugelöffnung (20) zueinander korrespondierende Gewindeelemente aufweisen, sodass der Magnet (3) in die Kugelöffnung (20) eingeschraubt werden kann und/oder dass innerhalb der Kugelöffnung (20) ein Füllstoff (6) vorgesehen ist, der den Magneten (3) hält und/oder die Kugelöffnung (20) abdichtet.

6. Messvorrichtung nach einem der Ansprüche 1 bis 5, **dadurch gekennzeichnet, dass** die Kupplungskugel (21) aus einem diamagnetischen oder paramagnetischen Werkstoff besteht.

7. Messvorrichtung nach einem der Ansprüche 1 bis 6, **dadurch gekennzeichnet, dass** die Kupplungskugel (21) und oder die Kugelaufnahme (11) aus einem Edelstahl besteht.

8. Messvorrichtung nach einem der Ansprüche 1 bis 7, **dadurch gekennzeichnet, dass** die Ausnehmung (10) der Kugelaufnahme (11) eine Längsachse aufweist, die radial zum Mittelpunkt der Kupplungskugel (21) verläuft.

9. Messvorrichtung nach einem der Ansprüche 1 bis 8, **dadurch gekennzeichnet, dass** der wenigstens eine Magnetsensor (4; 4A, 4B) derart angeordnet ist, dass er bei koaxialer Ausrichtung der Längsachsen (x_{Z}, x_{T}) des Zugfahrzeugs (2) und des Anhängers (1) von beiden Polen (N,S) des Magneten (3) zumindest annähernd gleich weit entfernt liegt.

10. Messvorrichtung nach einem der Ansprüche 1 bis 9, **dadurch gekennzeichnet, dass** zwei Magnetsensoren (4A, 4B) vorgesehen sind, die je in einer Ausnehmung (10) der Kugelaufnahme (11) angeordnet sind.

11. Messvorrichtung nach einem der Ansprüche 1 bis 10, **dadurch gekennzeichnet, dass** der wenigstens eine Magnetsensor (4; 4A, 4B) ein Hallsensor ist.

12. Fahrzeugkombination, umfassend ein Zugfahrzeug (2) und einen Anhänger (1), mit einer Messvorrichtung nach einem der Ansprüche 1 bis 11, **dadurch gekennzeichnet, dass** der wenigstens eine Magnetsensor (4; 4A, 4B) mit einer Steuereinheit (12) verbunden ist, dass in der Steuereinheit (12) die Ausgangssignale des Magnetsensors (4; 4A, 4B) anhand eines Steuerprogramms (121) verarbeitbar sind, und in Abhängigkeit des gemessenen Knickwinkels (w_{K}) wenigstens ein Aktuator (13) ansteuerbar ist, und dass der Aktuator (13) über eine Kraftübertragungseinheit (14) mit Rädern (16) des Zugfahrzeuges (2) und/oder Anhängers (1), oder damit verbundenen Bremsvorrichtungen gekoppelt ist.

13. Fahrzeugkombination nach Anspruch 12, **dadurch gekennzeichnet, dass** wenigstens ein Paar der Räder (16) des Zugfahrzeuges (2) und/oder Anhängers (1) lenkbar aufgehängt und mittels des wenigstens einen Aktuators (13) steuerbar ist.

14. Fahrzeugkombination nach Anspruch 12 oder 13, **dadurch gekennzeichnet, dass** wenigstens einem der Räder (16) des Anhängers (1) eine individuell betätigbare Bremsvorrichtung zugeordnet ist, dass die Bremsvorrichtung mittels des wenigstens einen Aktuators (13) steuerbar ist.

## Claims

1. Measuring device for measuring an articulation angle (w_{K}) between a tractor vehicle (2) which has a longitudinal axis (x_{Z}) and a trailer (1) which has a longitudinal axis (x_{T}), having a trailer coupling (9), which trailer coupling (9) has a coupling ball (21), a ball receptacle (11) serving to receive the coupling ball (21) and at least one magnetic sensor (4); 4A, 4B), wherein the coupling ball (21) has a ball opening (20), wherein a magnet (3) is mounted in the ball opening (20), wherein the ball receptacle (11) has a recess (10), wherein the at least one magnetic sensor (4; 4A, 4B) is mounted in the recess (10), wherein changes in a magnetic field (30) generated by the magnet (3) are detected by the magnetic sensor (4; 4A, 4B), **characterized in that,** in order to measure the articulation angle independently of occurring tilting movements and rotations about the longitudinal axis (x_{Z}, x_{T}), the center (3M) of the magnet (3) and the joint center (21M) of the trailer coupling (9), which defines a center of rotation, have at least approximately the same position.

2. Measuring device according to claim 1, **characterized in that** the ball opening (20) is a bore, which bore passes through the coupling ball (21) in whole or in part, and/or **in that** the recess (10) is a bore.

3. Measuring device according to claim 1 or 2, **characterized in that** the magnet (3) is aligned with its longitudinal axis (X_{ML}), which longitudinal axis (X_{ML}) extends between magnetic poles (N, S) of the magnet, parallel to the longitudinal axis (x_{Z}) of the tractor vehicle (2).

4. Measuring device according to one of claims 1 to 3, **characterized in that** the dimensions of the magnet (3) and its position within the ball opening (20) are selected such that a space remains between the poles (N, S) of the magnet (3) and the outer surface (25) of the coupling ball (21).

5. Measuring device according to one of claims 1 to 4, **characterized in that** the magnet (3) and the ball opening (20) have threaded elements corresponding to one another, so that the magnet (3) can be screwed into the ball opening (20) and/or that a filler (6) is provided inside the ball opening (20), which holds the magnet (3) and/or seals the ball opening (20).

6. Measuring device according to one of claims 1 to 5, **characterized in that** the coupling ball (21) consists of a diamagnetic or paramagnetic material.

7. Measuring device according to one of claims 1 to 6, **characterized in that** the coupling ball (21) and/or the ball receptacle (11) consists of a stainless steel.

8. Measuring device according to one of claims 1 to 7, **characterized in that** the recess (10) of the ball receptacle (11) has a longitudinal axis which extends radially to the center of the coupling ball (21).

9. Measuring device according to one of the claims 1 to 8, **characterized in that** the at least one magnetic sensor (4; 4A, 4B) is arranged in such a way that it is at least approximately equidistant from both poles (N, S) of the magnet (3) when the longitudinal axes (x_{Z}, x_{T}) of the tractor vehicle (2) and the trailer (1) are coaxially aligned.

10. Measuring device according to one of claims 1 to 9, **characterized in that** two magnetic sensors (4A, 4B) are provided, each of which is arranged in a recess (10) of the ball receptacle (11).

11. Measuring device according to one of claims 1 to 10, **characterized in that** the at least one magnetic sensor (4; 4A, 4B) is a Hall sensor.

12. Vehicle combination, comprising a tractor vehicle (2) and a trailer (1), having a measuring device according to one of claims 1 to 11, **characterized in that** the at least one magnetic sensor (4; 4A, 4B) is connected to a control unit (12), **in that** in the control unit (12) the output signals of the magnetic sensor (4; 4A, 4B) can be processed with the aid of a control program (121), and at least one actuator (13) can be controlled as a function of the measured articulation angle (w_{K}), and **in that** the actuator (13) is coupled via a power transmission unit (14) to wheels (16) of the tractor vehicle (2) and/or trailer (1), or braking devices connected thereto.

13. Vehicle combination according to claim 12, **characterized in that** at least one pair of the wheels (16) of the tractor vehicle (2) and/or trailer (1) is steerably suspended and is controllable by means of the at least one actuator (13).

14. Vehicle combination according to claim 12 or 13, **characterized in that** at least one of the wheels (16) of the trailer (1) is associated with an individually operable braking device, **in that** the braking device is controllable by means of the at least one actuator (13).

## Revendications

1. Dispositif de mesure pour mesurer un angle d'articulation (W_{K}) entre un véhicule tracteur (2), qui présente un axe longitudinal (X_{Z}), et une remorque (1), qui présente un axe longitudinal (X_{T}), avec un attelage de remorque (9), lequel attelage de remorque (9) présente une rotule d'attelage (21), un logement de rotule (11) servant à recevoir la rotule d'attelage (21) ainsi qu'au moins un capteur magnétique (4 ; 4A, 4B), la rotule d'attelage (21) présentant une ouverture de rotule (20), un aimant (3) étant monté dans l'ouverture de rotule (20), le logement de rotule (11) présentant un évidement (10), ledit au moins un capteur magnétique (4 ; 4A, 4B) étant monté dans l'évidement (10), des variations d'un champ magnétique (30) généré par l'aimant (3) étant détectées par le capteur magnétique (4 ; 4A, 4B), **caractérisé en ce que**, pour mesurer l'angle d'articulation indépendamment des mouvements de bascule et des rotations autour de l'axe longitudinal (X_{Z}, X_{T}) qui se produisent, le centre (3M) de l'aimant (3) et le centre d'articulation (21M) de l'attelage de remorque (9) qui définit un centre de rotation présentent au moins approximativement la même position.

2. Dispositif de mesure selon la revendication 1, **caractérisé en ce que** l'ouverture de rotule (20) est un alésage, lequel alésage traverse la rotule d'attelage (21) en totalité ou en partie, et/ou que l'évidement (10) est un alésage.

3. Dispositif de mesure selon la revendication 1 ou 2, **caractérisé en ce que** l'aimant (3) est orienté avec son axe longitudinal (X_{ML}), lequel axe longitudinal (X_{ML}) s'étend entre les pôles magnétiques (N, S) de l'aimant, parallèlement à l'axe longitudinal (X_{Z}) du véhicule tracteur (2).

4. Dispositif de mesure selon l'une des revendications 1 à 3, **caractérisé en ce que** les dimensions de l'aimant (3) ainsi que sa position dans l'ouverture de rotule (20) sont choisies de telle sorte qu'il reste un espace entre les pôles (N, S) de l'aimant (3) et la surface extérieure (25) de la rotule d'attelage (21).

5. Dispositif de mesure selon l'une des revendications 1 à 4, **caractérisé en ce que** l'aimant (3) et l'ouverture de rotule (20) présentent des éléments filetés correspondant l'un à l'autre, de sorte que l'aimant (3) peut être vissé dans l'ouverture de rotule (20) et/ou qu'il est prévu à l'intérieur de l'ouverture de rotule (20) une matière de remplissage (6) qui maintient l'aimant (3) et/ou rend étanche l'ouverture de rotule (20).

6. Dispositif de mesure selon l'une des revendications 1 à 5, **caractérisé en ce que** la rotule d'attelage (21) est constituée d'un matériau diamagnétique ou paramagnétique.

7. Dispositif de mesure selon l'une des revendications 1 à 6, **caractérisé en ce que** la rotule d'attelage (21) et/ou le logement de rotule (11) sont constitués d'un acier inoxydable.

8. Dispositif de mesure selon l'une des revendications 1 à 7, **caractérisé en ce que** l'évidement (10) du logement de rotule (11) présente un axe longitudinal qui s'étend radialement par rapport au centre de la rotule d'attelage (21).

9. Dispositif de mesure selon l'une des revendications 1 à 8, **caractérisé en ce que** ledit au moins un capteur magnétique (4 ; 4A, 4B) est disposé de manière à être au moins approximativement équidistant des deux pôles (N, S) de l'aimant (3) lorsque les axes longitudinaux (X_{Z}, X_{T}) du véhicule tracteur (2) et de la remorque (1) sont alignés de manière coaxiale.

10. Dispositif de mesure selon l'une des revendications 1 à 9, **caractérisé en ce que** deux capteurs magnétiques (4A, 4B) sont prévus, qui sont disposés chacun dans un évidement (10) du logement de rotule (11).

11. Dispositif de mesure selon l'une des revendications 1 à 10, **caractérisé en ce que** ledit au moins un capteur magnétique (4 ; 4A, 4B) est un capteur à effet Hall.

12. Combinaison de véhicules comprenant un véhicule tracteur (2) et une remorque (1), équipée d'un dispositif de mesure selon l'une des revendications 1 à 11, **caractérisée en ce que** ledit au moins un capteur magnétique (4 ; 4A, 4B) est relié à une unité de commande (12), que les signaux de sortie du capteur magnétique (4 ; 4A, 4B) peuvent être traités dans l'unité de commande (12) à l'aide d'un programme de commande (121), qu'au moins un actionneur (13) peut être commandé en fonction de l'angle d'articulation (W_{K}) mesuré et que l'actionneur (13) est accouplé par l'intermédiaire d'une unité de transmission de force (14) à des roues (16) du véhicule tracteur (2) et/ou de la remorque (1) ou à des dispositifs de freinage qui y sont reliés.

13. Combinaison de véhicules selon la revendication 12, **caractérisée en ce qu'**au moins une paire de roues (16) du véhicule tracteur (2) et/ou de la remorque (1) est suspendue de manière orientable et peut être commandée au moyen dudit au moins un actionneur (13).

14. Combinaison de véhicules selon la revendication 12 ou 13, **caractérisée en ce qu'**un dispositif de freinage actionnable individuellement est associé à au moins une des roues (16) de la remorque (1) et que le dispositif de freinage peut être commandé au moyen dudit au moins un actionneur (13).
